# EUROPEAN PATENT SPECIFICATION

(11) **EP 0 939 242 B1**
(45) Date of publication and mention of the grant of the patent: **25.02.2004**
(21) Application number: 98309628.0
(22) Date of filing: 24.11.1998
(51) Int. Cl.: F16F 9/12, F16F 9/48, F16F 9/49

(54) **Movement-controlling device**
Bewegungssteuernde Vorrichtung
Dispositif commandant le mouvement

(30) Priority: 23.01.1998 GB 9801536
(43) Date of publication of application: 01.09.1999
(73) Proprietor: TRELLEBORG AB, 231 22 Trelleborg (SE)
(72) Inventor: Ecarnot, Eric, 25770 Serre-les-Sapins (FR)
(74) Representative: Foster, David Martyn

(56) References cited:
- GB-A- 1 284 265
- GB-A- 2 281 370
- US-A- 3 598 205
- US-A- 4 527 780
- PATENT ABSTRACTS OF JAPAN vol. 016, no. 343 (M-1285), 24 July 1992 (1992-07-24) & JP 04 102734 A (TOKICO LTD), 3 April 1992 (1992-04-03)

## Description

The invention relates to movement-controlling devices. One embodiment of the invention, to be described below in more detail by way of example only, is in the form of a movement-controlling device for controlling the opening and/or closing of a door of a vehicle.

A known movement-controlling device is that described in GB 2281370 A which discloses the features of the preamble of claims 1 and 14.

According to the invention, there is provided a movement-controlling device, comprising a tubular body having piston means sealingly slidable therein between first and second ends of the tubular body, the piston means dividing the interior of the body into first and second chambers filled with fluid and carrying a piston rod sealingly protruding externally of the tubular body through the second end thereof, the piston means incorporating pressure-responsive control means operative initially, in response to an external force applied to the piston rod causing the pressure difference between the two chambers to exceed a predetermined level, to allow initial fluid flow between the two chambers through the piston means and consequent movement of the piston means within the tubular body and operative secondly and following the initial flow to allow the flow to continue while the pressure difference exceeds a lower level, the pressure-responsive control means comprising a first member pivotably mounted in the piston means and a first passageway through the piston means connecting the first and second chambers, the first member being biassed into a closed position in which a first part of its surface sealingly blocks the passageway whereby when the pressure difference exceeds the predetermined level the pressure acting through the passageway on the first surface area part produces a sufficient force to move the first member away from its closed position to allow the initial fluid flow, the pressure acting on the first member through the passageway thereafter acting on a larger part of the surface of the member to produce a sufficient force to hold the first member away from the closed position when the pressure difference has fallen below the predetermined level.

According to the invention, there is further provided a fluid-controlled spring for controlling the angular movement of a door in a motor vehicle, comprising a hollow cylinder having a main piston slidable therein between a first closed end of the cylinder and a second or opposite end through which sealingly extends a piston rod carried by the main piston, the first end of the cylinder and the distal end of the piston rod carrying separate fixing means one of which is adapted for attachment to the door and the other for attachment to the vehicle body whereby the piston rod moves outwardly and inwardly of the cylinder as the door is opened and closed, a first chamber being defined between the main piston and the first end of the cylinder and a second chamber being defined on the opposite side of the piston, the first and second chambers being filled with hydraulic fluid, and pressure-responsive control means mounted in the main piston to control the flow of liquid between the two chambers and thereby to control the angular movement of the door, the control means comprising a cavity in the main piston, a passageway in the main piston which is open to one of the chambers and extends through an entrance aperture in a wall of the cavity and thence through the cavity to an exit therefrom leading to the other chamber, and a pivotable member movable angularly within the cavity about an axis parallel to the piston rod towards and away from the said wall and biassed into a closed position in which it sealingly closes the entrance to block flow of fluid between the two chambers and thus to resist movement of the piston rod and the door, whereby application of a force to the door which is sufficient to cause the pressure in the said one chamber to exceed the pressure in the other chamber by at least a predetermined amount produces a sufficient force acting on the member through the entrance to move the member away from its closed position to allow flow of fluid into the cavity and thence to the other chamber and consequent movement of the main piston and angular movement of the door, the pressure of the fluid acting through the entrance on a larger part of the surface of the member being sufficient to hold the member away from the closed position when the pressure in the said one chamber exceeds the pressure in the other chamber by a lesser amount.

Movement-controlling devices embodying the invention and in the form of fluid springs for controlling the opening and closing movement of vehicle doors, will now be described, by way of example only, with reference to the accompanying diagrammatic drawings in which:
Figure 1 is a longitudinal section through one of the springs;
Figure 2 is a longitudinal section through a piston in the spring of Figure 1, taken on the line II-II of Figure 3;
Figure 3 is a cross-section on the line III-III of Figure 2;
Figure 4 is a section on the line IV-IV of Figure 2;
Figure 5 is a longitudinal section through part of the piston of Figures 2 - 4, taken on the line V-V of Figure 4;
Figure 6 corresponds to Figure 3 and shows the piston in the closed position;
Figure 7 corresponds to Figure 3 and shows the piston in an operating position;
Figure 8 corresponds to Figure 3 and shows the piston in a maximum opening position;
Figures 9,10 and 11 respectively correspond to Figures 6,7 and 8 and view the piston in the direction of the arrow A of Figure 2;
Figure 12 is a longitudinal section through part of a modified form of the piston;
Figure 13 is a cross-section on the line XIII-XIII of Figure 12, showing the piston in a closed position; and
Figure 14 corresponds to Figure 13 but shows the piston in an operating position; and
Figure 15 is a cross-section similar to Figures 13 and 14 of a further modified form of the piston.

The spring to be described comprises a cylindrical body 20 having a closed end 22 carrying a fixture 24. The opposite end 25 of the body 20 has an opening 26 in which is located a guide 28. The guide 28 is held in position by an apertured disc 30 which is located by a circumferential shoulder 32 extending inwardly around the interior of the cylindrical body 20. An O-ring 34 seals the guide 28 to the body 20. A circular seal 36 is located in a recess 38 in the guide 28. A piston rod 40 is slidably movable through the guide 28 and sealed by the circular seal 36, and carries a piston 42 which will be described in more detail below.

A slidable separator 44 is mounted within the cylindrical body 20 and is sealed thereto by an O-ring 46.

The interior of the cylindrical body 20 is thus divided into three chambers 48,50 and 52. Chambers 48 and 50 are filled with a suitable liquid and chamber 52 is filled with gas under pressure.

Over part of its length, the interior wall of the cylindrical body 20 is provided with a longitudinally extending groove 56.

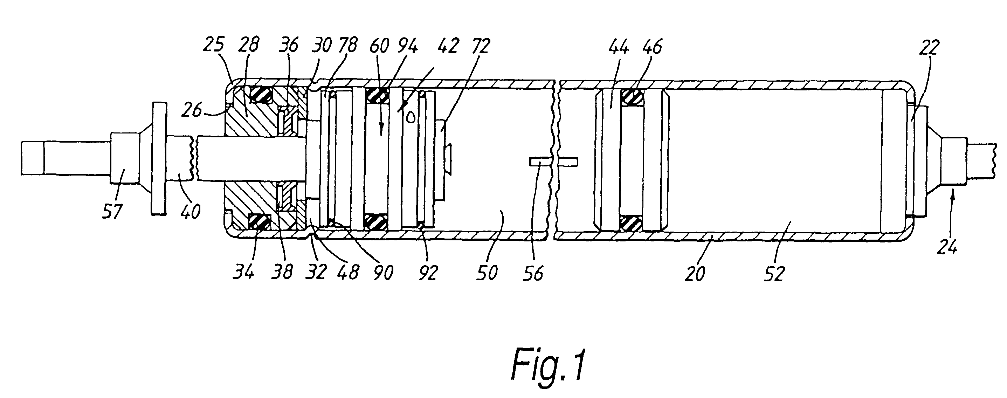

Piston rod 40 carries a fixture 57 at its distal end. In use, this fixture 57 is connected to the vehicle door and the fixture 24 is connected to the door frame (or the connections could of course be reversed). As the door moves towards its fully open position, the piston correspondingly moves outwardly of the cylindrical body 20 (towards the end 25 as shown in Figure 1). During such outward movement of the piston rod, it is of course necessary for the liquid to transfer from chamber 48 to chamber 50. Conversely, when the door moves towards the closed position, the piston rod moves inwardly of the cylindrical body 20 and the liquid must transfer from chamber 50 to chamber 48. As the piston rod 40 moves inwardly of the cylinder 20, the piston rod will occupy an increasing volume within the cylinder. Compensation for this is provided by corresponding movement of the separator 44 against the pressure of the gas within chamber 52. Separator 44 moves in the opposite direction during outward movement of the piston rod.

When the door is at or near its fully closed position, the piston 42 is overlapped by the longitudinal groove 56 - that is, the groove 56 extends from one side of the piston to the other side (in Figure 1, the length of the cylindrical body 20 and the length of the groove 56 are reduced for illustrative purposes). When the door is initially moved away from the fully closed position, so that the piston rod 40 moves outwardly of the cylinder 20, hydraulic liquid can transfer from chamber 48 to chamber 50 through groove 56 without any significant resistance. The force required to be applied to the door is thus low. However, as soon as the door has been moved through a small angular extent from the fully closed position, the piston 42 will start to move away from the region of the cylinder 20 which includes the groove 56. Liquid can now only transfer from chamber 48 to chamber 50 through the piston 42 itself in a manner which will be explained. The transfer of fluid in this way controls movement of the piston rod and consequently the movement of the door.

When the piston 42 is not overlapped by groove 56, a relatively high force has to be applied to the piston rod 40 (by application of a corresponding force to the door itself) in order to initiate movement of the piston rod (in the door-opening or door-closing direction). However, once movement of the piston rod has started, the force required to continue such movement is greatly reduced. In this way, the door when stationary in each angular position is held firmly in that position and can only be moved from it by the application of a significant force. The door is thus held against inadvertent movement such as might be caused by wind or gravitational forces (if the vehicle is parked on a slope). However, after a sufficient force has been applied to the door to initiate movement away from its current angular position, the door can be moved to a new desired position with the application of a reduced force. When this reduced force ceases to be applied, the door stops and is held firmly in the new angular position until the required substantial force is again applied. The arrangement thus also assists in controllably opening the door to a limited extent when the vehicle is parked close to an obstruction and cannot be open to a greater extent without risk of damage.

The operation is similar during closing movement of the door (assuming that the piston 42 is not overlapped by groove 56). During such movement, the piston rod 40 moves inwardly of the cylinder 20 and hydraulic liquid must transfer from chamber 50 to chamber 48 through the piston 42. Again, the piston 42 so controls the flow of hydraulic fluid that a substantial force must be applied to the door to initiate its closing movement, but the force is sharply reduced once closing movement has started.

When the door is nearly fully closed, the piston 42 is once more overlapped by the groove 56 which allows free transfer of fluid from chamber 50 to chamber 48 and allows the door to be closed with minimum applied force.

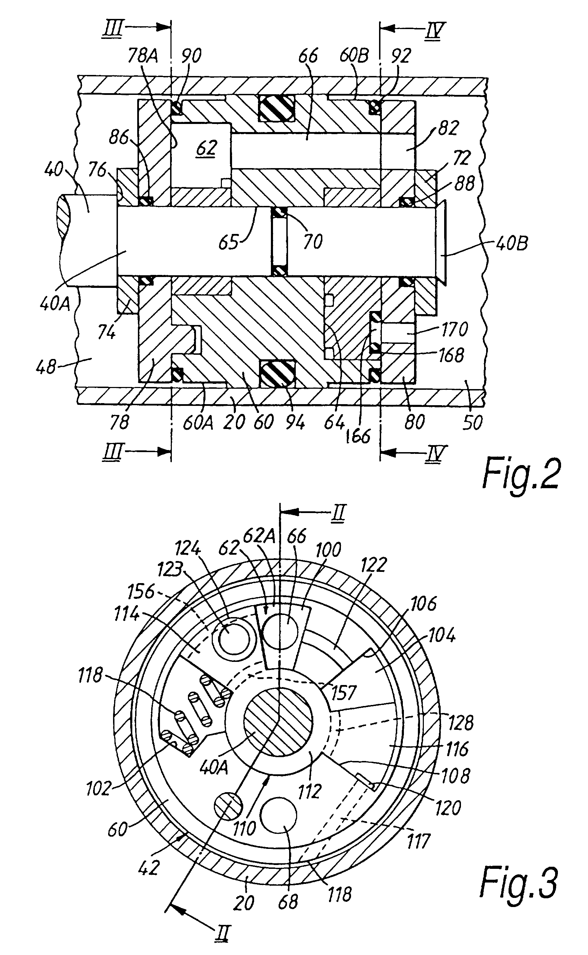

The piston 42 will now be described with reference to Figures 2,3 and 4.

The piston comprises a body 60 having recesses 62 and 64, a central bore 65 and radially displaced bores 66 and 68. The piston rod 40 has an end portion 40A of reduced diameter which is located within the bore 65 and sealed to it by a O-ring seal 70. The portion 40A has a head 40B which engages a disc 72. A corresponding disc 74 is located against a shoulder 76 of the piston rod 40. Circular end plates 78 and 80 are held in position against opposite faces of the main body 60 of the piston. The end plates 78 and 80 have through holes (one shown at 82) aligned with the bores 66 and 68 in the main body 60.

End plate 78 is sealed to the piston rod portion 40A by a O-ring 86. End plate 80 is sealed to the piston rod portion 40A by an O-ring 88. End plates 78 and 80 are sealed to the main body 60 by O-rings 90 and 92.

The main body 60 is sealed to the cylindrical body 20 by an O-ring 94.

As shown in Figure 3, the recess 62 extends from a first radial wall 100 to a second radial wall 102. The main body 60 also includes a further recess 104 which is radially displaced with respect to the recess 62 and extends from a radially directed wall 106 to a further radially directed wall 108. A palette 110 has a cylindrical portion 112 rotatably mounted on the piston rod part 40A (see Figure 2, also) and has integral vanes 114 and 116, of the same length in an axial direction as the cylindrical portion 112, which respectively extend into the recesses 62 and 104. A coil spring 118 in recess 62 urges the palette 110 in a clockwise direction as viewed in Figure 3 so that the vane 116 moves into contact with radial wall 108.

The recess 104 is connected to chamber 48 (Figure 1) by means of a bore 117 (shown dotted in Figure 3) which has an opening in radial wall 108 and extends therefrom to an opening 118 in the outer cylindrical face of the main body 60 in the region of the gap 60A (see Figure 2).

The vane 116 carries a circular disc-shaped seal 120 which, when the vane 116 is in the position shown in Figure 3, closes the opening of the bore 117 in the radial wall 108.

Recesses 62 and 104 are interconnected by a bore 122 in the main body 60.

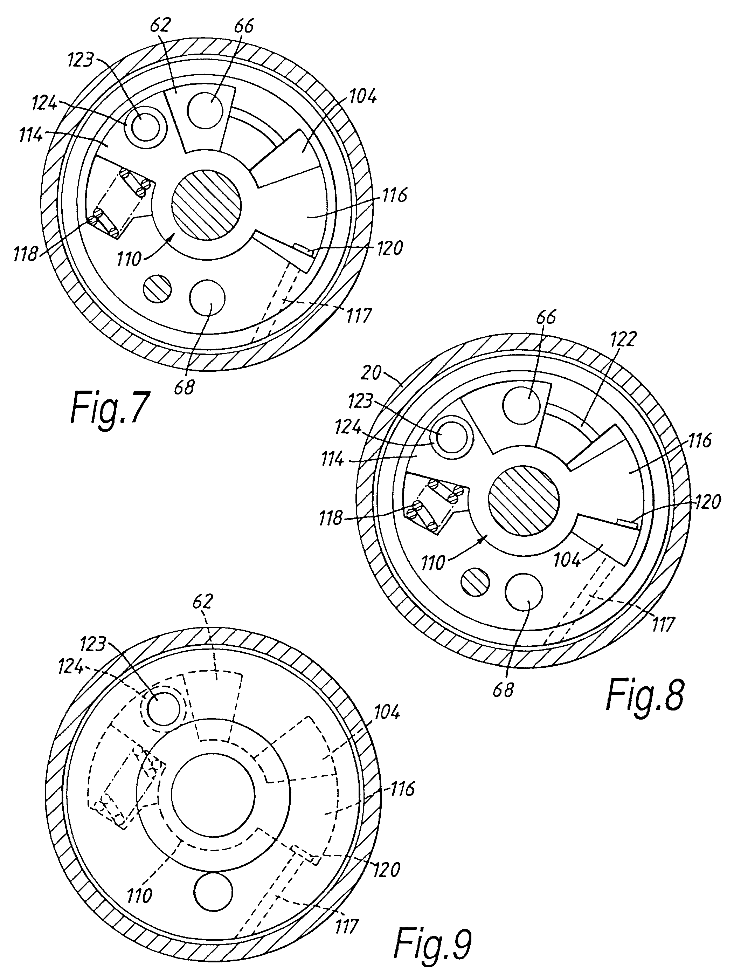

Vane 114 is provided with a circular recess 123 surrounded by a seal 124. The seal 124 is in sealing contact with the face 78A (see Figure 1) of the end plate 78. Figure 9 shows the end plate 78 which has a through hole 126. This hole 126 is radially positioned so that, when the palette 110 is in the position shown in Figure 3, hole 126 is in exact alignment with the circular recess 123 in the vane 114. The hole 126 is thus sealingly closed by the seal 124.

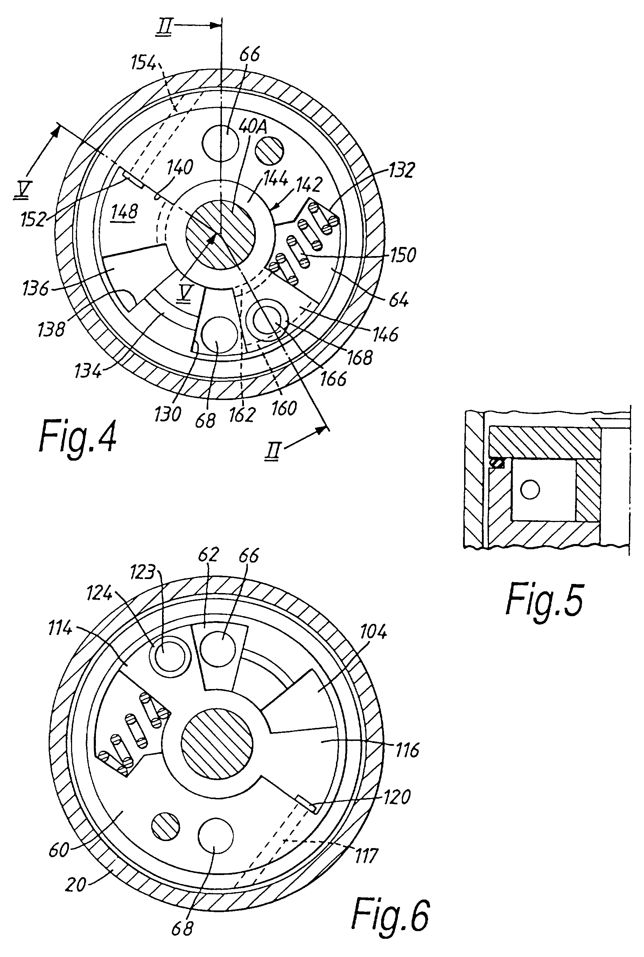

At the opposite axial end of the piston 42, there is a generally similar arrangement. Thus, recess 64 (Figure 4) extends from a first radial wall 130 to a second radial wall 132 and is connected by a bore 134 in the main body 60 to a second recess 136 extending from a radially directed wall 138 to another radially directed wall 140. A palette 142 has a cylindrical body 144 rotatably mounted on the piston rod part 40A which integrally carries vanes 146 and 148 positioned in and arcuately movable in the recesses 130 and 136. A compression spring 150 urges the palette 142 in a clockwise direction (as viewed in Figure 4) so that vane 148 moves into contact with radial wall 140. Seal 152 carried by vane 148 closes off an opening in the radial wall 140 which is positioned at one end of a through bore 154 extending to the external cylindrical surface of the main body 60 in the region of the gap 60B (see Fig. 2).

In a manner to be explained, palette 112 controls the operation of the door spring during opening movement of the door, while palette 142 controls operation of the door spring during closing movement of the door.

The portions of the recesses 62 and 104 which are not occupied by the vanes 114 and 116 are filled with liquid which flows into the recesses from chamber 50 through bores 66 and 122 (Figure 3).

Arcuately directed bores 156 and 157 (shown dotted in Figure 3) extend through the vane 114 and allow the fluid to fill the portions of the recess 62 on each side of the vane 114.

The operation of the door spring during opening movement of the door will now be considered in more detail.

When the door is fully closed, the piston 42 (Figure 1) will be overlapped by the groove 56. As already explained, during initial opening movement of the door, the required transfer of hydraulic liquid from chamber 48 to chamber 50 can freely take place via groove 56 and minimum opening force needs to be applied to the door. However, when the door has opened through a small angular distance, the piston will no longer be overlapped by the groove 56, and transfer of hydraulic liquid stops. In order to open the door further, the user must exert a relatively strong opening force on the door. This force tends to move the piston rod 42 outwardly of the cylindrical body 20. The hydraulic liquid within chamber 48 becomes pressurised and exerts a force through the gap 60A and the bore 117 (Figure 3) against the seal 120 mounted on the vane 116. When the force produced by the pressure acting on the small surface of the seal 120 becomes sufficient to overcome the force exerted by the spring 118, the palette 110 begins to turn in the anti-clockwise direction (as viewed in Figure 3). The palette 110 thus moves from the position shown in Figure 6 to the partially open position shown in Figure 7. This movement is not resisted by the hydraulic fluid within the recess 104, because this fluid is displaced through conduit 122 and into recess 62 and thence to chamber 50 (Figures 1 and 2) via through bore 66 and hole 82 (Figure 2). Similarly, the anti-clockwise movement of the palette 110 is not resisted by the hydraulic fluid within recess 62, because this hydraulic fluid flows through the arcuately shaped bores 156 and 157 and thence through bore 66 to chamber 50.

However, the pressure of the fluid acting on the vane 116 through bore 117 (see Figure 3) is now applied to substantially the whole side face of the vane 116, instead of being applied only to the seal 120. The force applied to the vane therefore increases, turning it further in the anti-clockwise direction.

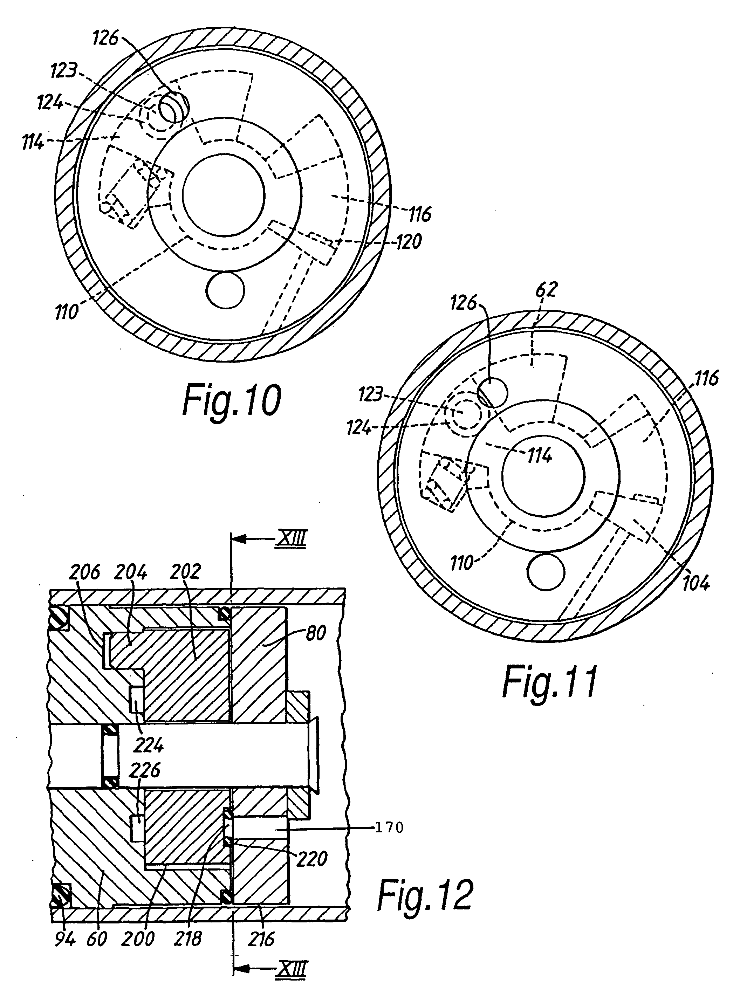

Furthermore, as the palette 110 begins to move in the anti-clockwise direction, in response to the force produced by the pressure of the hydraulic fluid within the bore 117, the corresponding movement of the vane 114 starts to move the seal 124 away from the hole 126 in the end plate 78 (see Figure 10). This therefore now allows fluid from chamber 48 to flow through hole 126 into the portion 62A (see Figure 3) of recess 62 and thence to chamber 50 through bore 66. This relatively free flow of fluid from chamber 48 to chamber 50 reduces the force which has to be applied to the door the piston rod to in the outward direction. As the palette 110 moves further in the anti-clockwise direction, more of the hole 126 in the end plate 78 becomes uncovered (see Figure 11) and a greater flow of fluid is possible, thus further reducing the force which has to be exerted on the door. Therefore, after a relatively high opening force has been applied to the door, sufficient to start anti-clockwise and movement of the palette 110 (see Figure 3), the force required to maintain such movement is reduced because (a) the pressure applied to the vane 116 through the bore 117 is now applied to a larger surface area, and (b) the hole 126 in the end plate 78 is progressively opened to allow a greater flow of liquid from chamber 48 to chamber 50. The greater the speed of opening movement of the door, the greater is the force applied by the fluid to the vane 116 and the more is the hole 134 in the end plate 78 open. Therefore, this compensates for increased dynamic forces created as the rate of flow of the fluid increases and which would otherwise increase the force required to open the door.

A channel 128 is provided through the vane 116 to allow the fluid flowing through the passage 117 to flow through the vane and thence through passage 122 and bore 66 into chamber 50.

If the user stops applying the opening force to the door, the pressure difference between the chambers 48 and 50 falls to zero as the movement of the door stops, and the force acting on the vane 116 consequently falls as well. The spring 102 turns the palette 110 in the clockwise direction back to the position shown in Figure 3. The seal 120 shuts off the passageway 117. Chambers 48 and 50 are thus no longer connected and the piston 42 is held in a stationary position, holding the door in a corresponding angular position. A relatively strong force must now be applied to the door in order to move it away from this position.

During closing movement of the door, requiring the piston rod 40 to move inwardly of the cylinder 20, hydraulic fluid must flow from chamber 50 to chamber 48. This is controlled by palette 142 (Figure 4) which operates in substantially the same way as the palette 110 of Figure 3.

Thus, when the user applies a sufficiently high closing force to the door, the pressure exerted by the piston 42 on the hydraulic fluid in chamber 50 is applied through bore 154 (Figure 4) to the seal 152 carried by the vane 148. Provided that the user is applying a sufficiently high force, the hydraulic fluid pressure will be sufficient to start to turn the palette 142 in an anti-clockwise direction as viewed in Figure 4, against the force of the spring 150. The fluid in the chamber 136 is forced by the moving vane 148 through the passage 134 into the chamber 130 and thence through bore 68 into chamber 48 via a correspondingly positioned hole (not shown) in end plate 78. As the vane 146 moves angularly through the chamber 130, fluid can transfer from one side of it to the other through passageways 160 and 162 (corresponding to passageways 156 and 157 in vane 114, Figure 3). Once the relatively high applied force has started to move the vane 148 away from the end wall 140, the fluid pressure from chamber 50, which is applied to the vane through the bore 154, can act on a larger surface area of the vane, enabling the angular movement of the vane to continue with a lower applied force.

Figures 2 and 4 show how the vane 146 carries a circular recess 166 incorporating an O-ring 168 which, when the palette 142 is in the position shown in Figure 4, is co-axial with a hole 170 through the end plate 80. Hole 170 is thus blocked in this position of the palette 142. However, as the palette 142 begins to move in the anti-clockwise direction, the hole 170 becomes progressively unblocked and open to the interior of the chamber 64. This facilitates increased movement of the fluid in chamber 50 to chamber 48 through bore 68 and allows a greater rate of flow of the fluid as the speed of closing movement of the door is increased.

When the user stops applying a closing force to the door, and its movement consequently stops, the pressures in chambers 50 and 48 become equal, and the palette 142 is turned back to the position shown in Figure 4 by the spring 150, so that the seal 152 closes the passageway 154. The door is thus held in its current position, and can only be moved from this position by the application of a relatively high force.

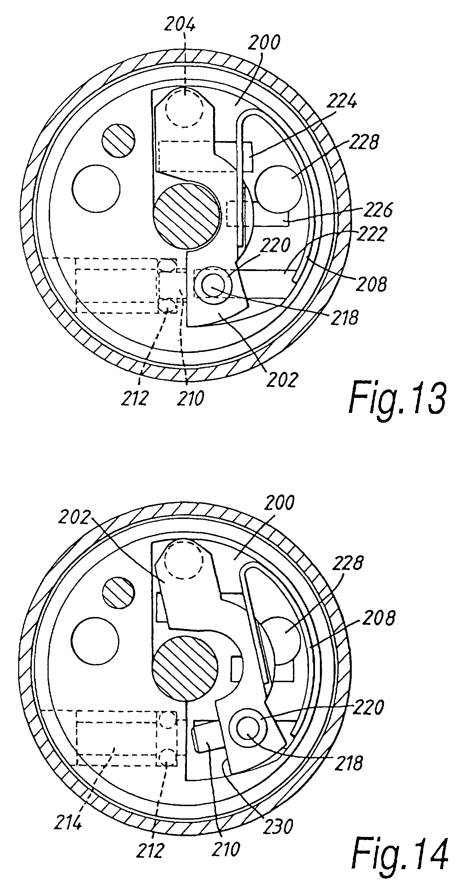

Figure 12 corresponds to part of Figure 2 and shows a partial longitudinal section through a modified form of piston. Items corresponding to those in the other Figures are similarly referenced.

As shown in Figures 12, 13 and 14, the main body 60 of the piston 42 has a recess 200 defining a cavity in which a blade 202 is pivotted by means of an integral pivot pin 204 rotatable within a hole 206. The blade 202 is biassed into position shown in Figure 13 by a leaf spring 208. The blade carries an integral pin 210 which, when the blade 202 is in the position shown in Figure 13, sealingly extends into an O-ring 212 at the end of a bore 214. The bore 214 extends from the cavity 200, through the main body 60 of the piston to an opening in the main body which is in communication with the chamber 50 via a narrow cylindrical gap 216 (see Figure 12).

As shown in Figure 12, the cavity 200 is closed off by an end plate 80. The blade 202 has a circular recess 218 surrounded by an O-ring 220. As shown in Figures 12 and 13, when the blade 204 is in the position shown in Figure 13 the recess 218 is aligned with the hole 170 through the end plate 80, and this hole 170 is thus sealed from the cavity 200 by the seal 220. The opposite wall of the recess 200 is provided with grooves 222, 224 and 226 (see Figure 13 also). A through bore 228 leads from the cavity 200, through the main body 60 of the piston, and through the opposite face (not shown) of the piston into the chamber 48. Recess 200 is thus filled with hydraulic fluid from the chamber 48 which enters through the bore 228.

It will initially be assumed that the vehicle door is open to a significant extent such that the piston 42 is not overlapped by the groove 56 (Figure 1), and that the user wishes to move the door towards the closed position. With the blade 202 in the closed position shown in Figure 13, communication between chambers 48 and 50 is blocked. Flow of fluid between chambers 48 and 50 is prevented. As the user applies a force to the door, the piston 42 will increase the pressure of the fluid within the chamber 50, as compared with the pressure within chamber 48. This increased fluid pressure will be applied to the pin 210 (Figures 13 and 14) via the bore 214 and, when sufficient, will pivot the blade 202 in an anti-clockwise direction as shown in Figure 14. The bore 214 is no longer sealingly closed, and fluid from chamber 50 can now enter into cavity 200 through the bore. At the same time, however, the pressure of the fluid in chamber 50 is now applied not only to the end of the pin 210 but also to the larger surface area 230 of the blade 202. The blade 202 can thus be held in the open position (Figure 14) with a lower force now applied to the door.

The fluid entering cavity 200 through the bore 214 flows through the grooves 222, 224 and 226 to the opposite side of the blade and flows thence to chamber 48 through the bore 228.

In addition, the angular opening movement of the blade 204 displaces the recess 218 and the O-ring seal 220 away from the hole 170 in the end plate 80 (see Figure 12). Fluid can now easily enter the cavity 200 through the bore 170 from the chamber 50 and can flow into chamber 48 through bore 228.

As before, therefore, a relatively high force must be applied to the door to start the closing movement. However, once movement has started, the force required to continue this movement is sharply reduced. Furthermore, increasing fluid flow from chamber 50 to chamber 48 is allowed, through bore 170, as the blade 202 pivots further, thus increasing the permitted flow of hydraulic fluid as a function of speed of movement of the piston rod and the corresponding speed of angular movement of the door.

When the user no longer applies a closing force to the door, movement of the piston stops, and the pressures in chambers 48 and 50 equalise. The blade 202 thus returns to the closed position shown in Figure 13.

The opposite end of the piston 42 is similarly constructed, and operates in a corresponding way when the door is moved towards the closed position.

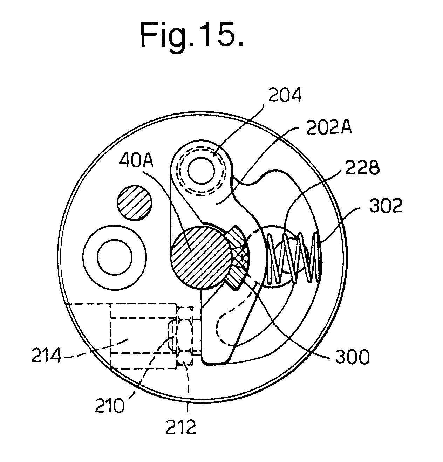

Figure 15 shows a modified form of the piston. The view in the Figure corresponds to that of Figure 13 and items corresponding to those in the other Figures are similarly referenced.

In this modified piston, the blade 202A incorporates a magnet 300 which in the position shown in Figure 15 with pin 210 closing the bore 214, rests against the outer circumference of the piston rod 40A.

In Figure 15, the leaf spring 208 of Figures 13 and 14 has been replaced with a coil spring 302 acting to bias the pin 210 into the bore 214. It will be appreciated that the leaf spring arrangement of Figures 13 and 14 may be retained in place of the coil spring 302 of Figure 15.

The magnet 300 is attracted to the piston rod 40A and thus produces a force which in addition to that of the coil spring 302, tends to hold the pin 210 in the bore 214.

As fluid flows in the bore 214 during movement of the door as described above, the blade 202A pivots about the pivot pin 204, and the magnet 300 is moved away from the piston rod 40A. Since the couple exerted between the magnet 300 and piston rod 40A diminishes exponentially with distance, the biasing effect of the magnet 300 rapidly becomes insignificant.

Thus, by combining the biasing effect of the magnet 300 and the coil spring 302, a weaker coil spring 302 may be used than is necessary in the earlier described embodiment. Thus, in this embodiment, a strong force is exerted to keep the pin 210 in the bore 214 when the door is not being moved by a user, but once movement occurs and fluid flow causes the blade 202A to pivot in an anticlockwise direction (as viewed in Figure 15) about pivot pin 204, the force required to keep the bore 214 open rapidly diminishes because of the correspondingly diminishing biasing force. Furthermore, greater fluid flow is achieved through bore 214 since the blade 202A once pivoted, is not so strongly biased towards its closing position, is able to open further and therefore allows an easier flow of fluid through the bore 214 during movement of the door by the user.

It will be understood that the opposite end of the piston 42 is similarly constructed and operates in a corresponding way when the door is moved towards the closed position.

Thus by combining non-linear biasing means such as a magnet with linear biasing means such as a coil spring, a non-linear biasing force i.e. a biasing force not varying proportionally with distance, is exerted on the blade 202A.

Where technical features mentioned in any claim herein are followed by reference symbols, those reference symbols are included solely for the purpose of increasing the intelligibility of the claims.

## Claims

1. A movement controlling device, comprising a tubular body (20) having piston means (42) sealingly slidable therein between first and second ends (22,25) of the tubular body (20), the piston means (42) dividing the interior of the body (20) into first and second chambers (50,48) filled with fluid and carrying a piston rod (40) sealingly protruding externally of the tubular body (20) through the second end (25) thereof, the piston means incorporating pressure-responsive control means operative initially, in response to an external force applied to the piston rod (40) causing the pressure difference between the two chambers (48,50) to exceed a predetermined level, to allow initial fluid flow between the two chambers (48,50) through the piston means (42) and consequent movement of the piston means (42) within the tubular body (20) and operative secondly and following the initial flow to allow the flow to continue while the pressure difference exceeds a lower level, **characterised by** the pressure-responsive control means comprising a first member (116) pivotably mounted in the piston means (42) and a first passageway (117,104,128,104,122,62,66) through the piston means (42) connecting the first and second chambers (50,48), the first member (116) being biased into a closed position in which a first part of its surface sealingly blocks the passageway (117,104,128,104,122,62,66) whereby when the pressure difference exceeds the predetermined level the pressure acting through the passageway (117,104,128,104,122,62,66) on the first surface area part produces a sufficient force to move the first member (116) away from its closed position to allow the initial fluid flow, the pressure acting on the first member (116) through the passageway (117,104,128,104,122,66,62) thereafter acting on a larger part of the surface of the member (116) to produce a sufficient force to hold the first member (116) away from the closed position when the pressure difference has fallen below the predetermined level.

2. A device according to claim 1, in which the first member (116) is movable within a cavity (104) having a fluid exit (122) connected to one chamber (50) and a fluid entrance (117) connected to the other chamber (48), the fluid entrance (117) comprising an aperture in a wall of the cavity (104), the surface being the surface of a side of the member (116) which moves towards the wall (108) of the cavity (104) as the first member (116) is biased into the closed position so that the said part of the surface sealingly closes the aperture.

3. A device according to claim 2, in which the first member (116) substantially fills the cross-section of the cavity (104).

4. A device according to claim 3, in which the passageway (117,104,128,104,122,62,66) through the piston means (42) includes a passage (128) through the first member (116) from the said side thereof to an opposite side thereof, the passage (128) being positioned away from the said first part of the surface.

5. A device according to any preceding claim, in which the pressure-responsive control means includes a second passageway (126,62,66) through the piston means between the two chambers (48,50), and valve means controlled by movement of the first member (116) so that the second passageway (126,62,66) is closed when the first member (116) is in the closed position but becomes progressively more open as the member (116) moves away from the closed position.

6. A device according to claim 5, in which the valve means comprises a second member (114) linked for movement with the first member (116), the second member (114) moving within a second cavity (62) having an exit (66) and an entrance (126) respectively connected to the two chambers (50,48), the second member (114) carrying sealing means (124) which blocks the entrance (126) when the first-mentioned member (116) is in the closed position and which progressively opens the entrance (126) as the first member (116) moves away from the closed position.

7. A device according to claim 6, in which the two members (116,114) extend in radial directions away from and are attached to a body (112) which is angularly movable around an axis extending longitudinally through the piston means (42).

8. A device according to claim 7, in which the axis is aligned with the piston rod (40).

9. A device according to any preceding claim, including spring means (118) mounted in the or one of the cavities (62,104) and acting on the or the respective member (114,116) to bias the or the respective member (114,116) into the closed position.

10. A device according to any preceding claim, including magnet means mounted in the or one of the cavities (104,62) and acting on the or the respective member (116,114) to bias the or the respective member (116,114) into a closed position.

11. A device according to any preceding claim, including second, similar, control means carried by the piston means (42) and operative to control movement of the piston means (42) in the opposite direction.

12. A device according to any preceding claim, in which the fluid is hydraulic fluid.

13. A device according to claim 12, including secondary piston means sealingly slidable in the tubular body (20) and positioned between the first-mentioned piston means and the first end (22) of the tubular body (20) and defining a gas-filled chamber (52) between itself and the first end (22) of the tubular body (20), the secondary piston means being slidable within the tubular body (20) to compensate for the volume within the tubular body (20) which is occupied by the piston rod (40) as the first-mentioned piston means moves.

14. A fluid-controlled spring for controlling the angular movement of a door in a motor vehicle, comprising a hollow cylinder (20) having a main piston (42) slidable therein between a first closed end (22) of the cylinder (20) and a second or opposite end (25) through which sealingly extends a piston rod (40) carried by the main piston (42), the first end (22) of the cylinder (20) and the distal end (25) of the piston rod (40) carrying separate fixing means (24,57) one of which is adapted for attachment to the door and the other for attachment to the vehicle body whereby the piston rod (40) moves outwardly and inwardly of the cylinder (20) as the door is opened and closed, a first chamber (50) being defined between the main piston (42) and the first end (22) of the cylinder (20) and a second chamber (48) being defined on the opposite side of the piston, the first and second chambers (48,50) being filled with hydraulic fluid, and pressure-responsive control means mounted in the main piston (42) to control the flow of liquid between the two chambers (48,50) and thereby to control the angular movement of the door, **characterised by** control means comprising a cavity (104) in the main piston (60), a passageway (117,104,128,104,122,62,66) in the main piston (42) which is open to one of the chambers (48) and extends through an entrance aperture (117) in a wall (108) of the cavity (104) and thence through the cavity (104) to an exit (122) therefrom leading to the other chamber (50), and a pivotable member (116) movable angularly within the cavity (104) about an axis parallel to the piston rod (40) towards and away from the said wall (108) and biased into a closed position in which it sealingly closes the entrance (117) to block flow of fluid between the two chambers (48,50) and thus to resist movement of the piston rod (40) and the door, whereby application of a force to the door which is sufficient to cause the pressure in the said one chamber (48) to exceed the pressure in the other chamber (50) by at least a predetermined amount produces a sufficient force acting on the member (116) through the entrance (117) to move the member (116) away from its closed position to allow flow of fluid into the cavity (104) and thence to the other chamber (50) and consequent movement of the main piston (42) and angular movement of the door, the pressure of the fluid acting through the entrance (117) on a larger part of the surface of the member (116) being sufficient to hold the member (116) away from the closed position when the pressure in the said one chamber (48) exceeds the pressure in the other chamber (50) by a lesser amount.

15. A spring according to claim 14, in which the pressure-responsive control means includes a second passageway (126,62,66) through the main piston (42) between the two chambers (48,50), and valve means controlled by movement of the first member (116) so that the second passageway (126,62,66) is closed when the first member (116) is in the closed position but becomes progressively more open as the member (116) moves away from the closed position.

16. A spring according to claim 15, in which the valve means comprises a second member (114) linked for movement with the first member (116), the second member (114) carrying sealing means (124) which blocks the entrance (126) when the first member (116) is in the closed position and which progressively opens the entrance (126) as the first member (116) moves away from the closed position.

17. A spring according to claim 14 or 15, in which the cavity (104) occupies at least part of a hemispherical shape within the piston and the said wall (108) extends in a generally radial direction.

18. A spring according to claim 14 or 15, in which the cavity is arcuately shaped with respect to the axis of the piston rod (40), the said wall (108) extends generally radially, and the member (116) is movable in an arcuate direction with the cavity (104).

19. A spring according to claim 16, in which the cavity (104) in which the first member (116) moves is arcuately shaped with respect to the axis of the piston rod (40), the said wall (108) extends in a generally radial direction and the first member (116) is movable in an arcuate direction within the cavity (104); and in which the second member (114) is movable in an arcuate direction in a second arcuately shaped cavity (62) forming part of the second passageway (126,62,66).

20. A spring according to any one of claims 14 to 19, including magnet means (300) mounted in the cavity (200) and acting to bias the pivotable member (202A) into the closed position.

21. A spring according to claim 20, wherein the magnet means (300) is mounted on one of the pivotable member (202A) and the piston rod (40A) and acts to attract the pivotable member (202A) and the piston rod (40A) together.

22. A spring according to claim 19 or claim 20, in which the two members (116,114) extend in radial directions away from and are attached to a body (112) which is angularly movable around the axis of the piston rod (40).

23. A spring according to any one of claims 18 to 22, in which the or each member ((202,202A), 116,114) substantially fills the cross-section of the or the respective cavity (200,104,62), and in which the or each passageway through the main piston (42) includes a passage ((222,224,226), 128, (156,157)) through the respective member.

24. A spring according to any one of claims 14 to 23, including second, similar, control means carried by the main piston and operative to control movement of the piston in the opposite direction.

25. A spring according to any one of claims 14 to 24, including secondary piston means (44) sealingly slidable in the cylinder (20) and positioned between the main piston (42) and the first end (22) of the cylinder (20) and defining a gas-filled chamber (52) between itself and the first end (22), the secondary piston means (44) being slidable within the cylinder (20) to compensate for the volume within the cylinder (20) which is occupied by the piston rod (40) as the main piston (42) means moves.

## Patentansprüche

1. Bewegungssteuernde Vorrichtung mit einem rohrförmigen Körper (20), welcher ein in diesem zwischen ersten und zweiten Enden (22, 25) des röhrenförmigen Körpers (20) abdichtendes gleitbares Kolbenmittel (42) aufweist, wobei das Kolbenmittel (42) das Innere des Körpers (20) in erste und zweite mit Flüssigkeit gefüllte Kammern (50, 48) aufteilt und einen Kolbenstift (40) trägt, welcher dichtend durch das zweite Ende (25) des rohrförmigen Körpers (20) nach außen hervorragt, wobei das Kolbenmittel ein druckansprechendes, zu Beginn wirksames Steuerungsmittel beinhaltet, um als Reaktion auf eine externe auf den Kolbenstift (40) wirkende Kraft, welche verursacht, daß die Druckdifferenz zwischen den beiden Kammern (48, 50) einen vorbestimmten Wert überschreitet, eine anfängliche Flüssigkeitsströmung zwischen den beiden Kammern (48, 50) durch das Kolbenmittel (42) und eine nachfolgende Bewegung des Kolbenmittels (42) innerhalb des rohrförmigen Körpers (20) zu ermöglichen und welches zweitens und der anfänglichen Strömung nachfolgend wirkt, um zu ermöglichen, daß die Strömung fortbesteht, während die Druckdifferenz einen niedrigeren Wert überschreitet,
**dadurch gekennzeichnet,**
**daß** das druckansprechende Steuerungsmittel ein drehbar auf dem Kolbenmittel (42) befestigtes erstes Element (116) und einen ersten Durchfluß (117, 104, 128, 104, 122, 62, 66) durch das Kolbenmittel (42), welcher die erste und die zweite Kammer (50, 48) verbindet, aufweist, wobei das erste Element (116) in einer geschlossenen Stellung vorgespannt ist, in welcher ein erster Teil seiner Oberfläche den Durchfluß (117, 104, 128, 104, 122, 62, 66) abdichtend sperrt, wobei, wenn die Druckdifferenz den vorbestimmten Wert überschreitet, der durch den Durchfluß (117, 104, 128, 104, 122, 62, 66) auf den Bereich der ersten Oberfläche des Teil wirkende Druck, eine zum Bewegen des ersten Elements (116) aus dessen geschlossener Stellung heraus ausreichende Kraft erzeugt, um die anfängliche Flüssigkeitsströmung zu ermöglichen, wobei der durch den Durchfluß (117, 104, 128, 104, 122, 62, 66) auf das erste Element (116) wirkende Druck nachfolgend auf einen größeren Teil der Oberfläche des Elementes (116) wirkt, um eine zum Halten des ersten Elements (116) aus der geschlossenen Stellung heraus ausreichende Kraft zu bewirken, wenn die Druckdifferenz unter den vorbestimmten Wert abgefallen ist.

2. Vorrichtung nach Anspruch 1, in welcher das erste Element (116) innerhalb eines Hohlraums (104) beweglich ist, welcher einen mit der einen Kammer (50) verbundenen Flüssigkeitsauslaß (122) und einen mit der anderen Kammer (48) verbundenen Flüssigkeitseinlaß (117) aufweist, wobei der Flüssigkeitseinlaß (117) einen Ausschnitt in einer Wand des Hohlraums (104) aufweist, wobei die Oberfläche einer Seite des Elements (116) in Richtung der Wand (108) des Hohlraums (104) bewegt wird, wenn das erste Element (116) in die geschlossene Stellung vorgespannt ist, so daß der Teil der Oberfläche den Ausschnitt dichtend verschließt.

3. Vorrichtung nach Anspruch 2, in welcher das erste Element (116) im wesentlichen den Querschnitt des Hohlraums (104) füllt.

4. Vorrichtung nach Anspruch 3, in welcher der Durchfluß (117, 104, 128, 104, 122, 62, 66) durch das Kolbenmittel (42) einen Durchlaß (128) durch das erste Elemente (116) von dessen besagter Seite zu dessen gegenüberliegenden Seite umfaßt, wobei der Durchlaß (128) von dem ersten Teil der Oberfläche wegweisend angeordnet ist.

5. Vorrichtung nach einem der vorstehenden Ansprüche, in welcher das druckansprechende Steuerungsmittel einen zweiten Durchfluß (126, 62, 66) durch das Kolbenmittel zwischen den zwei Kammern (48, 50) und durch die Bewegung des ersten Elements (116) gesteuerte Ventilmittel aufweist, so daß der zweite Durchfluß (126, 62, 66) geschlossen ist, wenn das erste Element (116) sich in der geschlossenen Stellung befindet, jedoch progressiv geöffnet wird, wenn das Element (116) aus der geschlossenen Stellung herausbewegt wird.

6. Vorrichtung nach Anspruch 5, in welcher das Ventilmittel ein zur Bewegung mit dem ersten Element (116) verbundenes zweites Element (114) aufweist, wobei das zweite Element (114) sich innerhalb eines zweiten Hohlraums (62) bewegt, welcher entsprechend mit den zwei Kammern (50, 48) verbunden einen Einlaß (66) und einen Auslaß (126) aufweist und wobei das zweite Element (114) ein Dichtmittel (124) trägt, welches den Einlaß (126) sperrt, wenn das erste Element (116) sich in der geschlossenen Stellung befindet, und welches den Einlaß (126) progressiv öffnet, wenn das erste Element (116) sich aus der geschlossenen Stellung heraus bewegt.

7. Vorrichtung nach Anspruch 6, in welcher die beiden Elemente (116, 114) in radialer Richtung voneinander fortragen und mit einem Körper (112) verbunden sind, welcher um eine sich längs durch das Kolbenmittel (42) erstreckenden Achse schwenkbar ist.

8. Vorrichtung nach Anspruch 7, in welcher die Achse bezüglich des Kolbenstifts (40) ausgerichtet ist.

9. Vorrichtung nach einem der vorstehenden Ansprüche, welche in dem oder in einer der Hohlräume (62, 104) befestigte Federmittel (118) umfaßt, welche auf das oder die betreffenden Bauteile (114, 116) wirken, um das oder die entsprechenden Bauteile (114, 116) in die geschlossene Stellung vorzuspannen.

10. Vorrichtung nach einem der vorstehenden Ansprüche, welche in dem oder in einem der Hohlräume (104, 62) befestigte Magnetmittel umfaßt, welche auf das oder die entsprechenden Elemente (116, 114) wirken, um das oder das entsprechende Elemente (116, 114) in einer geschlossenen Stellung vorzuspannen.

11. Vorrichtung nach einem der vorstehenden Ansprüche, welche ein zweites, gleiches von dem Kolbenmittel (42) getragenes Steuerungsmittel umfaßt, welches vorgesehen ist, um die Bewegung des Kolbenmittels (42) in der entgegengesetzten Richtung zu steuern.

12. Vorrichtung nach einem der vorstehenden Ansprüche, in welcher die Flüssigkeit eine Hydraulikflüssigkeit ist.

13. Vorrichtung nach Anspruch 12, welche ein zweites Kolbenmittel beinhaltet, welches dichtend in dem rohrförmigen Körper (20) gleitend ist und zwischen dem zuerst erwähnten Kolbenmittel und dem ersten Ende (22) des rohrförmigen Körpers (20) plaziert ist und zwischen sich selbst und dem ersten Ende (22) des rohrförmigen Körpers (20) eine gasgefüllte Kammer ausbildet, wobei das zweite Kolbenmittel innerhalb des rohrförmigen Körpers (20) gleitbar ist, um das Volumen innerhalb des rohrförmigen Körpers (20), welches durch den Kolbenstab eingenommen wird, wenn das zuerst erwähnte Kolbenmittel sich bewegt, zu kompensieren.

14. Flüssigkeitsgesteuerte Feder zur Kontrolle der Schwenkbewegung einer Tür eines Kraftfahrzeugs, welche einen hohlen Zylinder (20) mit einem Hauptkolben (42) aufweist, welcher zwischen einem ersten geschlossenen Ende (22) des Zylinders (20) und einem zweiten oder gegenüberliegenden Ende (25), durch welches ein durch den Hauptkolben (42) getragener Kolbenstab (40) dichtend hindurchragt, gleitend ist, wobei das erste Ende (22) des Zylinders (20) und das gegenüberliegende Ende (25) des Kolbenstabs (40) separate Befestigungsmittel (24, 57) tragen, von denen eines zur Verbindung mit der Türe und das andere zur Verbindung mit dem Kraftfahrzeugkörper vorgesehen ist, wobei der Kolbenstab (40) sich in den Zylinder (20) hinein und hinaus bewegt, wenn die Türe geöffnet oder geschlossen wird, eine erste Kammer (50) zwischen dem Hauptkolben (42) und dem ersten Ende (22) des Zylinders (20) und eine zweite Kammer (48) auf der gegenüberliegenden Seite des Kolbens ausgebildet ist, die erste und die zweite Kammer (48, 50) mit einer hydraulischen Flüssigkeit gefüllt sind und in dem Hauptkolben (42) ein druckansprechendes Steuerungsmittel zur Steuerung des Flüssigkeitsflusses zwischen den beiden Kammern (48, 50) und zur Steuerung der Schwenkbewegung der Türe befestigt ist, **dadurch gekennzeichnet, daß** das Steuerungsmittel einen Hohlraum (104) in dem Hauptkolben (60), einem Durchfluß (117, 104, 128, 104, 122, 62, 66) in dem Hauptkolben (42), welcher sich in eine der Kammern (48) öffnet und durch eine Eingangsöffnung (117) in einer Wand (108) des Hohlraums (104) und dann durch den Hohlraum (104) zu einem Ausgang (120) zur anderen Kammer (50) hindurchragt, und ein schwenkbares Element (116) aufweist, welches innerhalb des Hohlraums (104) um eine Achse parallel zum Kolbenstab (40) in Richtung der und von der Wand (108) wegschwenkbar beweglich ist und in einer geschlossenen Stellung vorgespannt ist, in welcher es den Eingang (117) dichtend verschließt, um eine Fluidströmung zwischen den beiden Kammern (48, 50) zu verhindern, und auf diese Weise einer Bewegung des Kolbenstabs (40) und der Türe widersteht, wobei die Anwendung einer Kraft auf die Türe ausreicht einen Druck in der ersten Kammer (48) hervorzurufen, welcher den Druck in der anderen Kammer (50) um wenigstens einen vorbestimmten Wert überschreitet, so daß eine ausreichende Kraft auf das Element (116) durch den Einlaß (117) wirkt, um das Element (116) aus seiner geschlossenen Stellung zu bewegen, um eine Fluidströmung in den Hohlraum (104) und von dort in die andere Kammer (50) und folglich eine Bewegung des Hauptkolbens (42) und eine Schwenkbewegung der Türe zu ermöglichen, wobei der Druck der Flüssigkeit, welche durch den Einlaß (117) auf einen größeren Teil der Oberfläche des Bauteils (116) wirkt, ausreichend ist, um das Element (116) aus seiner geschlossenen Stellung heraus zu halten, wenn der Druck in der ersten Kammer (48) den Druck in der anderen Kammer (50) um einen geringeren Wert überschreitet.

15. Feder gemäß Anspruch 14, in welcher das druckansprechende Steuerungsmittel einen zweiten Durchlaß (126, 62, 66) durch den Hauptkolben (42) zwischen den beiden Kammern (48, 50) und ein Ventilmittel, welches durch eine Bewegung des ersten Elementes (116) gesteuert wird, beinhaltet, so daß der zweite Durchlaß (126, 62, 66) geschlossen ist, wenn das erste Element (116) in der geschlossenen Stellung ist, allerdings progressiv weiter geöffnet wird, wenn sich das erste Element (116) aus der geschlossenen Stellung heraus bewegt.

16. Feder nach Anspruch 15, in welcher das Ventilmittel ein zweites Element (114) aufweist, welches für eine Bewegung mit dem ersten Element (116) verbunden ist, wobei das zweite Element (114) ein Dichtmittel (124) trägt, welches den Einlaß (126) verschließt, wenn das erste Element (116) sich in der geschlossenen Stellung befindet, und welches den Einlaß (126) progressiv öffnet, wenn das erste Elemente (116) sich aus der geschlossenen Stellung heraus bewegt.

17. Feder nach einem der Ansprüche 14 oder 15, in welcher der Hohlraum (104) wenigstens einen Teil einer halbkugelförmigen Gestalt innerhalb des Kolbens einnimmt und die Wand (108) in einer im wesentlichen radialen Richtung durchdringt.

18. Feder nach einem der Ansprüche 14 oder 15, in welcher der Hohlraum relativ zur Achse des Kolbenstabes (40) gebogen ausgeformt ist, die Wand (108) sich im wesentlichen radial erstreckt und das Element (116) bogenförmig in dem Hohlraum (104) beweglich ist.

19. Feder nach Anspruch 16, in welcher der Hohlraum (104), in welchem sich das erste Element (116) bewegt, relativ zur Achse des Kolbenstabes (40) bogenförmig ausgeformt ist, die Wand (108) sich in einer im wesentlichen radialen Richtung erstreckt und das erste Element (116) bogenförmig in dem Hohlraum (104) beweglich ist, und in welcher das zweite Element (114) bogenförmig in einem zweiten bogenförmig ausgeformten Hohlraum (62) beweglich ist, welcher einen Teil des zweiten Durchlasses (126, 62, 66) bildet.

20. Feder nach einem der Ansprüche 14 bis 19, welche ein Magnetmittel (300) beinhaltet, welches in dem Hohlraum (200) befestigt ist und so wirkt, daß das drehbare Element (202A) in der geschlossenen Stellung vorgespannt ist.

21. Feder nach Anspruch 20, **dadurch gekennzeichnet, daß** das Magnetmittel (300) auf einem der drehbaren Elemente (202A) und des Kolbenstabes (40A) festigt ist und derart wirkt, daß das drehbare Element (202A) und der Kolbenstab (40A) gegeneinander gezogen werden.

22. Feder nach Anspruch 19 oder 20, in welcher die zwei Elemente (116, 114) in radialen Richtungen von einem Körper (112) wegragen und mit diesem verbunden sind, wobei der Körper schwenkbar um die Achse des Kolbenstabes (40) herum beweglich ist.

23. Feder nach einem der Ansprüche 18 bis 22, in welcher das oder jedes Element ((202, 202A), 116, 114) den Querschnitt des oder des betreffenden Hohlraumes (200, 104, 62) im wesentlichen ausfüllen und in welcher der oder jeder Durchlaß durch den Hauptkolben (42) einen Durchlaß ((222, 224, 226), 128, (156, 157)) durch das betreffende Element beinhalten.

24. Feder nach einem der Ansprüche 14 bis 23, welche ein zweites ähnliches Steuerungsmittel beinhaltet, welches durch den Hauptkolben getragen ist und zur Steuerung einer Bewegung des Kolbens in der entgegengesetzten Richtung wirkt.

25. Feder nach einem der Ansprüche 14 bis 24, welche ein zweites dichtend in dem Zylinder (20) gleitendes und zwischen dem Hauptkolben (42) und dem ersten Ende (22) des Zylinders (20) angeordnetes zweites Kolbenmittel (44) beinhaltet, welches zwischen sich selbst und dem ersten Ende (22) eine gasgefüllte Kammer (52) ausbildet, wobei das zweite Kolbenmittel (44) innerhalb des Zylinders (20) gleitbar ist, um das Volumen innerhalb des Zylinders (20), welches durch den Kolbenstab eingenommen wird, wenn der Hauptkolben (42) sind bewegt, zu kompensieren.

## Revendications

1. Dispositif commandant le mouvement, comprenant un corps tubulaire (20) doté de moyens de piston (42) pouvant coulisser de manière étanche à l'intérieur de celui-ci entre des première et seconde extrémités (22, 25) du corps tubulaire (20), des moyens de piston (42) divisant l'intérieur du corps (20) en une première et seconde chambre (50, 48) remplies avec du fluide et supportant une tige de piston (40) faisant saillie de manière étanche à l'extérieur du corps tubulaire (20) à travers la seconde extrémité (25) de celui-ci, les moyens de piston comprenant des moyens de commande sensible à la pression fonctionnant tout d'abord en réponse à une force externe appliquée sur la tige de piston (40) amenant la différence de pression entre les deux chambres (48, 50) à dépasser un niveau prédéterminé, pour permettre l'écoulement initial de fluide entre les deux chambres (48, 50) à travers les moyens de piston (42) et le mouvement successif des moyens de piston (42) à l'intérieur du corps tubulaire (20) et fonctionnant ensuite et en suivant l'écoulement initial pour permettre à l'écoulement de continuer alors que la différence de pression dépasse un niveau inférieur, **caractérisé en ce qu'**il comprend les moyens de commande sensible à la pression comprenant un premier élément (116) monté de manière pivotante dans les moyens de piston (42) et une première voie de passage (117, 104, 128, 104, 122, 62, 66) à travers les moyens de piston (42) qui raccordent les première et seconde chambres (50, 48), le premier élément (116) étant sollicité dans une position fermée à laquelle une première partie de sa surface bloque de manière étanche la voie de passage (117, 104, 128, 104, 122, 62, 66) moyennant quoi lorsque la différence de pression dépasse le niveau prédéterminé, la pression agissant à travers la voie de passage (117, 104, 128,104, 122, 62, 66) sur la première partie de surface produit une force suffisante pour déplacer le premier élément (116) à distance de sa position fermée pour permettre l'écoulement initial du fluide, la pression agissant sur le premier élément (116) à travers la voie de passage (117, 104, 128, 104, 122, 66, 62), agissant après quoi sur une plus grande partie de la surface de l'élément (116) pour produire une force suffisante pour maintenir le premier élément (116) à distance de la position fermée lorsque la différence de pression a chuté au dessous du niveau prédéterminé.

2. Dispositif selon la revendication 1, dans lequel le premier élément (116) est mobile à l'intérieur d'une cavité (104) comprenant une sortie de fluide (122) raccordée à une chambre (50) et une entrée de fluide (117) raccordée à l'autre chambre (48), l'entrée de fluide (117) comprenant une ouverture dans une paroi de la cavité (104), la surface étant la surface d'un côté de l'élément (116) qui se déplace vers la paroi (108) de la cavité (104) lorsque le premier élément (116) est sollicité dans la position fermée de sorte que ladite partie de la surface ferme de manière étanche l'ouverture.

3. Dispositif selon la revendication 2, dans lequel le premier élément (116) remplit sensiblement la section transversale de la cavité (104).

4. Dispositif selon la revendication 3, dans lequel la voie de passage (117, 104, 128, 104, 122, 62, 66) à travers les moyens de piston (42) comprend un passage (128) à travers le premier élément (116) à partir dudit côté de celui-ci vers un côté opposé de celui-ci, le passage (128) étant positionné à distance de ladite première partie de la surface.

5. Dispositif selon l'une quelconque des revendications précédentes, dans lequel les moyens de commande sensible à la pression comprennent une seconde voie de passage (126, 62, 66) à travers les moyens de piston entre les deux chambres (48, 50), et des moyens de soupape commandés par le mouvement du premier élément (116) de sorte que la seconde voie de passage (126, 62, 66) soit fermée lorsque le premier élément (116) est dans la position fermée, mais devienne progressivement plus ouverte lorsque l'élément (116) s'éloigne de la position fermée.

6. Dispositif selon la revendication 5, dans lequel les moyens de soupape comprennent un second élément (114) relié pour le mouvement avec le premier élément (116), le second élément (114) se déplaçant avec une seconde cavité (62) ayant une sortie (66) et une entrée (126) respectivement raccordées aux deux chambres (50, 48), le second élément (114) supportant des moyens d'étanchéité (124) qui bloquent l'entrée (126) lorsque le premier élément (116) mentionné est dans la position fermée et qui ouvrent progressivement l'entrée (126) lorsque le premier élément (116) s'éloigne de la position fermée.

7. Dispositif selon la revendication 6, dans lequel les deux éléments (116, 114) s'étendent dans les directions radiales à distance de et sont fixés à un corps (112) qui est mobile de manière angulaire autour d'un axe s'étendant longitudinalement à travers les moyens de piston (42).

8. Dispositif selon la revendication 7, dans lequel l'axe est aligné avec la tige de piston (40).

9. Dispositif selon l'une quelconque des revendications précédentes, comprenant des moyens de ressort (118) montés dans les cavités ou l'une des cavités (62, 104) agissant sur l'élément ou sur l'élément respectif (114, 116) pour solliciter l'élément ou l'élément respectif (114, 116) dans la position fermée.

10. Dispositif selon l'une quelconque des revendications précédentes, comprenant des moyens magnétiques montés dans les cavités ou dans l'une des cavités (104, 62) et agissant sur l'élément ou sur l'élément respectif (116, 114) pour solliciter l'élément ou l'élément respectif (116, 114) dans une position fermée.

11. Dispositif selon l'une quelconque des revendications précédentes, comprenant des seconds moyens de commande similaires supportés par les moyens de piston (42) et fonctionnant pour commander le mouvement des moyens de piston (42) dans la direction opposée.

12. Dispositif selon l'une quelconque des revendications précédentes, dans lequel le fluide est du fluide hydraulique.

13. Dispositif selon la revendication 12, comprenant des moyens de piston secondaire pouvant coulisser de manière étanche dans le corps tubulaire (20) et positionnés entre les premiers moyens de piston mentionnés et la première extrémité (22) du corps tubulaire (20) et définissant une chambre remplie de gaz (52) entre lui-même et la première extrémité (22) du corps tubulaire (20), les moyens de piston secondaire pouvant être coulissés à l'intérieur du corps tubulaire (20) pour compenser le volume à l'intérieur du corps tubulaire (20) qui est occupé par la tige de piston (40) lorsque les premiers moyens de piston mentionnés se déplacent.

14. Ressort commandé par fluide destiné à commander le mouvement angulaire d'une porte dans un véhicule à moteur, comprenant un cylindre creux (20) doté d'un piston principal (42) pouvant coulisser à l'intérieur de celui-ci entre une première extrémité fermée (22) du cylindre (20) et une seconde extrémité ou extrémité opposée (25) à travers laquelle s'étend de manière étanche une tige de piston (40) supportée par le piston principal (42), la première extrémité (22) du cylindre (20) et l'extrémité distale (25) de la tige de piston (40) supportant des moyens de fixation séparés (24, 57) dont l'un est adapté pour la fixation à la porte et l'autre pour la fixation à la carrosserie du véhicule moyennant quoi la tige de piston (40) se déplace vers l'extérieur et vers l'intérieur du cylindre (20) lorsque la porte est ouverte et fermée, une première chambre (50) étant définie entre le piston principal (42) et la première extrémité (22) du cylindre (20) et une seconde chambre (48) étant définie du côté opposé du piston, les première et seconde chambres (48, 50) étant remplies avec du fluide hydraulique, et les moyens de commande sensible à la pression montés dans le piston principal (42) pour contrôler l'écoulement du liquide entre les deux chambres (48, 50) et contrôler ainsi le mouvement angulaire de la porte, **caractérisé en ce qu'**il comprend des moyens de commande comprenant une cavité (104) dans le piston principal (60), une voie de passage (117, 104, 128, 104, 122, 62, 66) dans le piston principal (42) qui est ouverte vers l'une des chambres (48) et s'étend par une ouverture d'entrée (117) dans une paroi (108) de la cavité (104) et de là à travers la cavité (104) vers une sortie (122) conduisant à partir de celle-ci à l'autre chambre (50), et un élément pivotant (116) mobile de manière angulaire à l'intérieur de la cavité (104) autour d'un axe parallèle à la tige de piston (40) vers et à distance de ladite paroi (108) et sollicité dans une position fermée dans laquelle il ferme de manière étanche l'entrée (117) pour bloquer l'écoulement du fluide entre les deux chambres (48, 50) et résister ainsi au mouvement de la tige de piston (40) et de la porte, moyennant quoi l'application d'une force sur la porte qui est suffisante pour amener la pression dans ladite une chambre (48) à dépasser la pression dans l'autre chambre (50) selon au moins une quantité prédéterminée, produit une force suffisante agissant sur l'élément (116) par le biais de l'entrée (117) pour déplacer l'élément (116) à distance de sa position fermée, afin de permettre l'écoulement du fluide dans la cavité (104) et de là vers l'autre chambre (50) et le mouvement successif du piston principal (42) et le mouvement angulaire de la porte, la pression du fluide agissant par le biais de l'entrée (117) sur une plus grande partie de la surface de l'élément (116) étant suffisante pour maintenir l'élément (116) à distance de la position fermée lorsque la pression dans ladite une chambre (48) dépasse la pression dans l'autre chambre(50) selon une quantité inférieure.

15. Ressort selon la revendication 14, dans lequel les moyens de commande sensible à la pression comprennent une seconde voie de passage (126, 62, 66) à travers le piston principal (42) entre les deux chambres (48, 50), et des moyens de soupape commandés par le mouvement du premier élément (116), de sorte que la seconde voie de passage (126, 62, 66) soit fermée lorsque le premier élément (116) est dans la position fermée mais devienne progressivement plus ouverte lorsque l'élément (116) s'éloigne de la position fermée.

16. Ressort selon la revendication 15, dans lequel les moyens de soupape comprennent un second élément (114) relié pour le mouvement avec le premier élément (116), le second élément (114) supportant des moyens d'étanchéité (124) qui bloquent l'entrée (126) lorsque le premier élément (116) est dans la position fermée et qui ouvrent progressivement l'entrée (126) lorsque le premier élément (116) s'éloigne de la position fermée.

17. Ressort selon la revendication 14 ou 15, dans lequel la cavité (104) occupe au moins une partie d'une forme hémisphérique à l'intérieur du piston et ladite paroi (108) s'étend dans une direction généralement radiale.

18. Ressort selon la revendication 14 ou 15, dans lequel la cavité est formée de manière arquée par rapport à l'axe de la tige de piston (40), ladite paroi (108) s'étend généralement de manière radiale, et l'élément (116) est mobile dans une direction arquée avec la cavité (104).

19. Ressort selon la revendication 16, dans lequel la cavité (104) dans laquelle le premier élément (116) se déplace, est formée de manière arquée par rapport à l'axe de la tige de piston (40), ladite paroi (108) s'étend dans une direction généralement radiale et le premier élément (116) est mobile dans une direction arquée à l'intérieur de la cavité (104) ; et dans lequel le second élément (114) est mobile dans une direction arquée dans une seconde cavité formée de manière arquée (62) faisant partie de la seconde voie de passage (126, 62, 66).

20. Ressort selon l'une quelconque des revendications 14 à 19, comprenant des moyens magnétiques (300) montés dans la cavité (200) et agissant pour solliciter l'élément pivotant (202A) dans la position fermée.

21. Ressort selon la revendication 20, dans lequel les moyens magnétiques (300) sont montés sur l'un parmi l'élément pivotant (202A) et la tige de piston (40A) et agissent pour attirer l'élément pivotant (202A) et la tige de piston (40A) ensemble.

22. Ressort selon la revendication 19 ou la revendication 20, dans lequel les deux éléments (116, 114) s'étendent dans les directions radiales à distance de et sont fixés à un corps (112) qui est mobile de manière angulaire autour de l'axe de la tige de piston (40).

23. Ressort selon l'une quelconque des revendications 18 à 22, dans lequel l'élément ou chaque élément ((202, 202A), 116, 114) remplit sensiblement la section transversale de la cavité ou de la cavité respective (200, 104, 62), et dans lequel la voie de passage ou chaque voie de passage à travers le piston principal (42) comprend un passage ((222, 224, 226), 128, (156, 157)) à travers l'élément respectif.

24. Ressort selon l'une quelconque des revendications 14 à 23, comprenant des seconds moyens de commande similaires supportés par le piston principal et fonctionnant pour commander le mouvement du piston dans la direction opposée.

25. Ressort selon l'une quelconque des revendications 14 à 24 comprenant des moyens de piston secondaire (44) pouvant coulisser de manière étanche dans le cylindre (20) et positionnés entre le piston principal (42) et la première extrémité (22) du cylindre (20) et définissant une chambre remplie de gaz (52) entre lui-même et la première extrémité (22), les moyens de piston secondaire (44) pouvant coulisser à l'intérieur du cylindre (20) pour compenser le volume à l'intérieur du cylindre (20) qui est occupé par la tige de piston (40), lorsque les moyens de piston principal (42) se déplacent.
